# EUROPEAN PATENT SPECIFICATION

(11) **EP 2 239 641 B1**
(45) Date of publication and mention of the grant of the patent: **30.05.2012**
(21) Application number: 10152837.0
(22) Date of filing: 05.02.2010
(51) Int. Cl.: G05B 23/02

(54) **Device and method for determining operating parameters of a gas-turbine plant**
Verfahren und Vorrichtung zur Ermittlung der Betriebsparametern einer Gas-Turbinen Anlage
Procédé et dispositif pour la détermination des paramètres de fonctionnement d'une installation de turbine à gas

(30) Priority: 06.02.2009 IT MI20090159
(43) Date of publication of application: 13.10.2010
(73) Proprietor: Ansaldo Energia S.p.A., Genova (IT)
(72) Inventor: Dodi, Andrea Giuseppe, 16156 Genova (IT); Ferrera, Flavio, 16131 Genova (IT); Montanella, Davide, 16151 Genova (IT); Pesce, Paolo, 16152 Genova (IT)
(74) Representative: Jorio, Paolo

(56) References cited:
- EP-A1- 1 286 031

## Description

The present invention relates to a method and a device for determining operating parameters of a gas-turbine plant and to a gas-turbine plant comprising said device.

Gas-turbine plants are known, which comprise a gas turbine, a compressor, a combustion chamber, a generator, and a device for determining operating parameters of the plant that are useful for regulating the amount of fuel introduced into the combustion chamber and the flowrate of air supplied to the compressor.

Plants of this type suffer, however, from phenomena of thermoacoustic instability inside the combustion chamber. Said phenomena, commonly designated by the term "humming", are caused by the fluctuation of the parameters of the fluids present in the combustion chamber. These phenomena of thermoacoustic instability determine onset of vibrations, which, in the long run, constitute a danger for the structure of the combustion chamber. Such a kind of plant is disclosed in EP1286031 A1.

An aim of the present invention is to provide a method and a device for determining operating parameters of a gas-turbine plant that will be able to overcome the drawbacks of the known art highlighted herein. In particular, an aim of the invention is to provide a method and a device for determining operating parameters of the gas-turbine plant that will be able to minimize the phenomena of thermoacoustic instability described above.

In accordance with said aims, the present invention regards a device and a method for determining operating parameters of a gas-turbine plant as claimed, in Claim 1 and Claim 13, respectively.

A further aim of the present invention is to provide a gas-turbine plant that will be free from the drawbacks that have emerged in the known art.

In accordance with the above aim, the present invention regards a gas-turbine plant as claimed in Claim 14.

Further characteristics and advantages of the present invention will emerge clearly from the ensuing description of a non-limiting example of embodiment thereof, with reference to the figures of the annexed drawings, wherein:
- Figure 1 is a schematic representation of a gas-turbine plant according to the present invention;
- Figure 2 is a schematic block representation of a device for determining operating parameters of a gas-turbine plant according to the present invention;
- Figure 3 is a detail of the device of Figure 2.

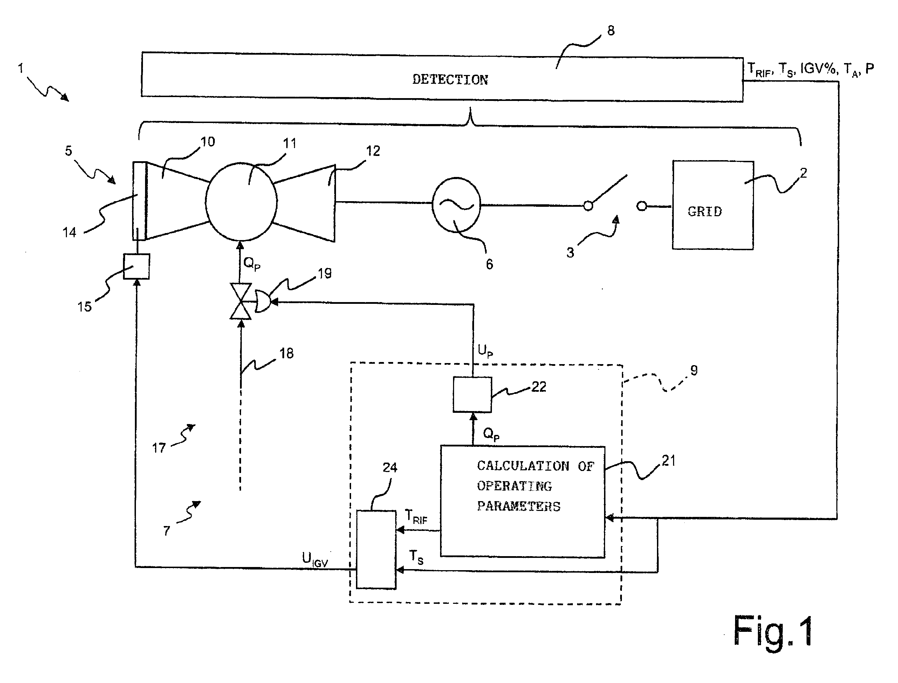

In Figure 1 designated by the reference number 1 is a gas-turbine plant for the production of electrical energy. The plant 1 can be selectively connected to a distribution grid 2 through a main switch 3 and comprises a turbine assembly 5, a generator 6, a gas-supply circuit 7 (only part of which is illustrated, for reasons of simplicity), a detection module 8, and a control device 9.

The turbine assembly 5 is of a conventional type and comprises a compressor 10, a combustion chamber 11, and a gas turbine 12.

According to an alternative embodiment of the present invention (not illustrated), the plant 1 is of the combined-cycle type and comprises, in addition to the gas-turbine assembly 5 and to the generator 6, also a steam-turbine assembly.

In particular, the compressor 10 is provided with a variable-geometry input stage 14, which comprises an array of adjustable inlet guide vanes (IGVs, not illustrated, for reasons of simplicity, in the attached figures), the inclination of which can be modified by means of an actuator 15 for regulating a flowrate of air drawn in by the compressor 10 itself.

The combustion chamber 11 is preferably of the annular type and is supplied with gas by the gas-supply circuit 7. In particular, the combustion chamber 11 comprises a plurality of burner assemblies (not illustrated for simplicity in the attached figures), for example twenty-four, which are supplied by the gas-supply circuit 7.

According to an alternative embodiment of the present invention (not illustrated), the combustion chamber 10 is supplied both with gas and with gas oil.

The gas-supply circuit 5 comprises a pilot delivery line 17 and a premix delivery line (not illustrated for simplicity).

The pilot delivery line 17 comprises a pilot delivery pipe 18 and a pilot valve 19, opening of which is regulated, as will be seen in greater detail hereinafter, by the control device 9 so as to supply a pilot-gas flowrate Q_{P} to the combustion chamber 11.

The generator 6 is mechanically connected to the same shaft as that of the turbine 12 and of the compressor 10 and is driven in rotation at the angular velocity of rotation of the turbine 12 and of the compressor 10. The generator 6 converts the mechanical power supplied by the turbine 12 into active electric power, hereinafter referred to simply as "current power P delivered", and makes it available for the distribution grid 2.

The detection module 8 is in communication with a plurality of sensors (not illustrated) of the plant 1 and supplies to the control device 9 a series of parameters regarding the plant 1, such as current power P delivered, ambient temperature T_{A}, current exhaust temperature T_{S} of the turbine 12, current position IGV% of the adjustable inlet guide vanes, etc.

The control device 9 uses the parameters coming from the detection module 8 for generating signals designed to regulate the amount of fuel introduced into the combustion chamber 11 and the flowrate of air supplied to the compressor 10.

In particular, the control device 9 generates a valve-control signal U_{P}, which is sent to the pilot valve 19 for regulating the amount of pilot gas introduced into the combustion chamber 11, and a vane-control signal U_{IGV}, which is sent to the actuator 15 of the adjustable inlet guide vanes.

The control device 9 comprises a device 21 for determining operating parameters of the plant 1, a pilot-control module 22, and an IGV-control module 24.

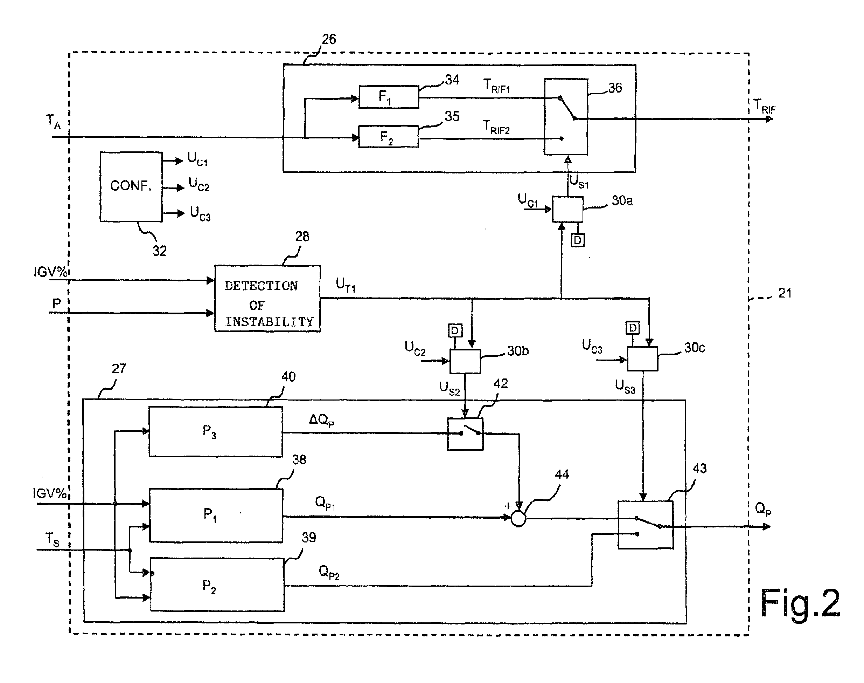

With reference to Figure 2, the device 21 for determining operating parameters of the plant 1 comprises: a first calculating module 26, for calculating a reference exhaust temperature T_{RIF} of the turbine 12 on the basis of the ambient temperature T_{A} detected by the detection module 8; a second calculating module 27, for calculating the pilot-gas flowrate Q_{P} to be supplied to the combustion chamber 11 on the basis of the current exhaust temperature T_{S} of the turbine 12 and on the basis of the current position IGV% of the adjustable inlet guide vanes of the compressor 10; an instability-detection module 28; selection modules 30a, 30b, 30c; and a configuration module 32.

The first calculating module 26 comprises a first temperature-calculation block 34, a second temperature-calculation block 35, and a selector block 36. The first temperature-calculation block 34 calculates a first reference exhaust temperature T_{RIF1} of the turbine 12 on the basis of the ambient temperature T_{A} according to a first calculation function F₁. The first calculation function F₁ defines the first reference exhaust temperature T_{RIF1} on the basis of the ambient temperature T_{A}, so as to guarantee a correct supply of air in the absence of thermoacoustic instability of the plant 1.

Hereinafter by the expression "thermoacoustic instability" is meant onset of vibrations of the wall of the combustion chamber 11 having an intensity and a frequency higher than an acceptability threshold and onset of sound waves inside the combustion chamber having intensity and frequency higher than an acceptability threshold.

The second temperature-calculation block 35 calculates a second reference exhaust temperature T_{RIF2} of the turbine 12 on the basis of the ambient temperature T_{A} according to a second calculation function F₂. The second calculation function F₂ defines the second reference exhaust temperature T_{RIF2} of the turbine 12 on the basis of the ambient temperature T_{A} so as to guarantee a correct supply of air in conditions of thermoacoustic instability. The second calculation function F₂ is preferably calibrated on the type and intensity of the thermoacoustic instability that typically arises in the combustion chamber 11 of the plant 1. Preferably, the second reference exhaust temperature T_{RIF2} obtained applying the second calculation function F₂ is higher than the first reference exhaust temperature T_{RIF1} obtained applying the first calculation function F₁.

The selector block 36 is configured for selecting and supplying at output one between the first reference exhaust temperature T_{RIF1} and the second reference exhaust temperature T_{FIF2} on the basis of an input selection signal U_{S1} coming from the selection module 30a.

The selection module 30a is configured so as to supply at output the selection signal U_{S1} on the basis of a configuration signal U_{C1}, of a logic type, coming from the configuration module 32. In particular, the selection signal U_{S1} is equal to a default signal (designated in the figure by the letter D) or, alternatively, to a control signal U_{T1}, which is also of a logic type, coming from the instability-detection module 28, according to the configuration signal U_{C1}. The control signal U_{T1}, as will be seen in greater detail hereinafter, can assume a first logic value, which indicates a thermoacoustic instability of the plant 1, or a second logic value, which indicates an absence of thermoacoustic instability of the plant 1.

Basically, the first calculating module 26 presents two operating modes that depend upon the configuration of the selection module 30a determined by the configuration signal U_{C1}.

In particular, when the selection signal U_{S1} at output from the selection module 30a is equal to the default signal, the selector block 36 supplies at output the first reference exhaust temperature T_{RIF1} calculated by the first calculation block 34.

When the selection signal U_{S1} at output from the selector module 30a is equal to the control signal U_{T1} coming from the instability-detection module 28, the selector block 36 supplies at output the first reference exhaust temperature T_{RIF1} if the control signal U_{T1} has the second logic value (in the absence of thermoacoustic instability of the plant 1), or else the second reference exhaust temperature T_{RIF2} if the control signal U_{T1} has the first logic value (in the presence of thermoacoustic instability).

The second calculating module 27 comprises a first flowrate-calculation unit 38, a second flowrate-calculation unit 39, a third flowrate-calculation unit 40, a selector block 42, a selector block 43, and an adder node 44.

The first flowrate-calculation unit 38 calculates a first pilot-gas flowrate Q_{P1} to be supplied to the combustion chamber 11, on the basis of the current position IGV% of the adjustable inlet guide vanes and on the basis of the current exhaust temperature T_{S} of the turbine 12. In particular, the first flowrate-calculation unit 38 calculates the first pilot-gas flowrate Q_{P1} starting from the current position IGV% and from the current exhaust temperature T_{S} of the turbine 12 according to a first flowrate-calculation function P₁.

The first flowrate-calculation function P₁ defines the first pilot-gas flowrate Q_{P1} designed to guarantee a proper operation of the plant 1 in conditions of absence of thermoacoustic instability.

The second flowrate-calculation unit 39 calculates a second pilot-gas flowrate Q_{P2} to be supplied to the combustion chamber 11 on the basis of the current position IGV% of the plurality of adjustable inlet guide vanes and on the basis of the current exhaust temperature T_{S} of the turbine 12. In particular, the second flowrate-calculation unit 39 calculates the second pilot-gas flowrate Q_{P2} starting from the current position IGV% and from the current exhaust temperature T_{S} of the turbine 12 according to a second flowrate-calculation function P₂.

The second flowrate-calculation function P₂ defines the second pilot-gas flowrate Q_{P2} designed to guarantee a proper operation of the plant 1 in conditions of thermoacoustic instability. The second flowrate-calculation function P₂ is preferably calibrated on the type and intensity of the thermoacoustic instability that typically arises in the combustion chamber 11 of the plant 1.

The third flowrate-calculation unit 40 calculates a pilot-gas-flowrate correction ΔQ_{P}, to be added to the first pilot-gas flowrate Q_{P1} calculated by the first flowrate-calculation unit 38, on the basis of the current position IGV% of the adjustable inlet guide vanes. In particular, the third flowrate-calculation unit 40 calculates the pilot-gas-flowrate correction ΔQ_{P} starting from the current position IGV% according to a third flowrate-calculation function P₃. The third flowrate-calculation function P₃ defines, in the embodiment described herein, a periodic pilot-gas-flowrate correction ΔQ_{P}, in particular of a sinusoidal type with amplitude A and period t.

The third flowrate-calculation function P₃ is preferably calibrated on the type and intensity of the thermoacoustic instability that is typically set up in the combustion chamber 11 of the plant 1.

The selector block 42 is configured for supplying at output the pilot-gas-flowrate correction ΔQ_{P} that it receives at input, selectively on the basis of an input selection signal U_{S2} coming from a second selection module 30b.

The second selection module 30b is configured so as to supply at output the selection signal U_{S1} on the basis of a configuration signal U_{C2} coming from the configuration module 32. In particular, the selection signal U_{S2} can be equal to a default signal (designated in the figure by the letter D) or, alternatively, to the control signal U_{T1} coming from the instability-detection module 28 according to the value of the configuration signal U_{C2}. The control signal U_{T1}, as has already been said previously, can assume a first logic value, indicating a thermoacoustic instability of the plant 1, or a second logic value, which indicates an absence of thermoacoustic instability of the plant 1.

Basically, when the selection signal U_{S2} at output from the second selection module 30b is equal to the default signal, the selector block 42 does not supply at output any signal. When the selection signal U_{S2} at output from the second selector module 30b is equal to the control signal U_{T1} coming from the instability-detection module 28, the selector block 42 does not supply at output any signal if the control signal U_{T1} has the second logic value (in the absence of thermoacoustic instability of the plant 1), or else supplies at output the pilot-gas-flowrate correction ΔQ_{P} if the control signal U_{T1} has the first logic value (in the presence of thermoacoustic instability).

The adder node 44 is configured for adding the first pilot-gas flowrate Q_{P1} calculated by the first calculation unit 38 to the pilot-gas-flowrate correction ΔQ_{P} at output from the selector block 42.

The selector block 43 is configured for supplying at output a pilot-gas flowrate Q_{P} equal to the pilot-gas flowrate at output from the adder node 44 or to the second pilot-gas flowrate Q_{P2}, on the basis of a selection signal U_{S3} at input coming from a third selection module 30c.

The third selection module 30c is configured so as to supply at output the selection signal U_{S3} on the basis of a configuration signal U_{C3} coming from the configuration module 32. In particular, the selection signal U_{S3} can be equal to a default signal (designated in the figure by the letter D) or, alternatively, to the control signal U_{T1} coming from the instability-detection module 28 according to the value of the configuration signal U_{C3}.

The control signal U_{T1}, as has already been said previously, can assume a first logic value, which indicates a thermoacoustic instability of the plant 1, or a second logic value, which indicates an absence of thermoacoustic instability of the plant 1.

Basically, when the selection signal U_{S3} at output from the third selector module 30c is equal to the default signal, the selector block 43 supplies at output the pilot-gas flowrate at output from the adder node 44. When the selection signal U_{S3} at output from the third selector module 30c is equal to the control signal U_{T1} coming from the instability-detection module 28, the selector block 43 supplies at output the value of pilot-gas flowrate at output from the adder node 44 if the control signal U_{T1} has the second logic value (in the absence of thermoacoustic instability of the plant 1), or else supplies at output the second pilot-gas flowrate Q_{P2} calculated by the second flowrate-calculation unit 39 if the control signal U_{T1} has the first logic value (in the presence of thermoacoustic instability).

Basically, the second calculating module 27 has three operating modes that depend upon the configuration of the selection modules 30b and 30c, said operating modes being determined, respectively, by the configuration signals U_{C2} and U_{C3}.

In the first operating mode of the second calculating module 27, the second selection module 30b is configured for supplying the default signal, and the third selection module 30c is configured for supplying the default signal. According to said operating mode, the pilot-gas flowrate Q_{P} at output from the calculating module 27 is equal to the first pilot-gas flowrate Q_{P1} calculated by the first flowrate-calculation unit 38.

In the second operating mode of the second calculating module 27, the second selection module 30b is configured for supplying the default signal, and the third selection module is configured for supplying the control signal U_{T1} coming from the instability-detection module 28. If the control signal U_{T1} has the second logic value (in the absence of thermoacoustic instability of the plant 1), the selection block 43 supplies at output a pilot-gas flowrate Q_{P} equal to the first pilot-gas flowrate Q_{P1}, whereas if the control signal U_{T1} has the first logic value (in conditions of thermoacoustic instability of the plant 1), the selection block 43 supplies at output a pilot-gas flowrate Q_{P} equal to the second pilot-gas flowrate Q_{P2} calculated by the second flowrate-calculation unit 39.

In the third operating mode of the second calculating module 27, the second selection module 30b is configured so as to supply the control signal U_{T1} coming from the instability-detection module 28, and the third selection module is configured for supplying the default signal.

If the control signal U_{T1} has the second logic value (in conditions of absence of thermoacoustic instability of the plant 1), the selection block 43 supplies at output a pilot-gas flowrate Q_{P} equal to the first pilot-gas flowrate Q_{P1} calculated by the first flowrate-calculation unit 38; if the control signal U_{T1} has the first logic value (in conditions of thermoacoustic instability), the selection block 43 supplies at output a pilot-gas flowrate Q_{P} equal to the sum of the first pilot-gas flowrate Q_{P1} and of the pilot-gas-flowrate correction ΔQ_{P}.

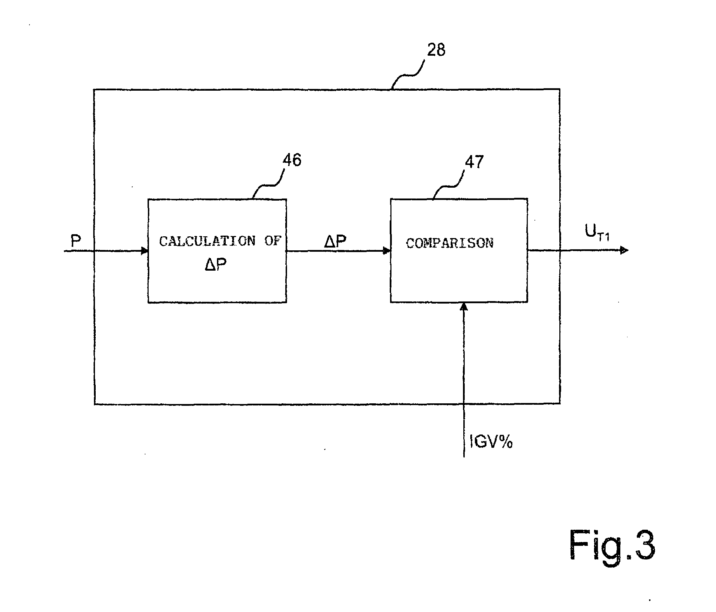

With reference to Figure 3, the instability-detection module 28 comprises a power-variation calculating module 46 and a comparison module 47.

The power-variation calculating module 46 receives at input the current power P supplied by the plant, and calculates a power variation ΔP in a time interval Δt of constant duration, for example 30 s.

The comparison module 47 receives at input the current position IGV% of the inlet guide vanes and the power variation ΔP calculated by the power-variation calculating module 46 and compares them with respective threshold values. If both of the parameters, current position IGV% and power variation ΔP are higher than the respective thresholds, the comparison module 47 supplies at output a control signal U_{T1} having the first logic value indicating a thermoacoustic instability of the plant 1.

If, instead, at least one of the parameters between current position IGV% and power variation ΔP is lower than the respective threshold value, the comparison module 47 supplies at output a control signal U_{T1} having a second logic value indicating an absence of thermoacoustic instability of the plant 1.

The configuration module 32 defines, through the respective configuration signals U_{C1}, U_{C2}, U_{C3}, the configuration of the selection modules 30a, 30b and 30c.

The configuration module 32 is configurable, for example by an operator by means of an interface (not illustrated), or else automatically on the basis of detected parameters of the plant 1, such as for example parameters indicating the seriousness of the thermoacoustic instability. Some examples of parameters indicating the seriousness of the thermoacoustic instability can be the intensity and frequency of the vibrations of the body of the combustion chamber 11, detected for example with accelerometers arranged on the body of the combustion chamber 11, or else the intensity and frequency of the sound waves present inside the combustion chamber 11, for example, detected through acoustic sensors arranged inside the combustion chamber 11.

With reference to Figure 1, the pilot control module 22 receives at input the value of pilot-gas flowrate Q_{P} calculated by the device 21 and supplies at output a valve-control signal U_{P}, which is sent to the pilot valve 19 for regulating the amount of pilot gas introduced into the combustion chamber 11.

The IGV-control module 24 receives at input the current exhaust temperature T_{S} of the turbine 12 and the reference exhaust temperature T_{RIF} of the turbine 12 determined by the device 21, calculates the difference between the current exhaust temperature T_{S} and the reference exhaust temperature T_{FIF}, and determines a vane-control signal U_{IGV} on the basis of said difference. The vane-control signal U_{IGV} is then sent to the actuator 15 of the adjustable inlet guide vanes for regulating the amount of air introduced into the combustion chamber 11.

Advantageously, the device 21 for determining operating parameters according to the present invention is flexible and enables adoption of different strategies of compensation of the thermoacoustic instability, according to the type and intensity of the thermoacoustic instability itself.

Finally, it is clear that modifications and variations may be made to the device and method for determining operating parameters of a gas-turbine plant described herein, without thereby departing from the scope of the annexed claims.

## Claims

1. A device for determining operating parameters of a gas-turbine plant (1), the device comprising:
a first calculating module (26) for calculating a reference exhaust temperature (T_{RIF}) of the gas turbine (12) on the basis of an ambient temperature (T_{A});
a second calculating module (27) for calculating a pilot-gas flowrate (Q_{P}) to be supplied to a combustion chamber (11) of the plant (1) on the basis of a current exhaust temperature (T_{S}) of the gas turbine (12) and on the basis of a current position (IGV%) of adjustable inlet guide vanes of a compressor (10) of the plant (1);
the device (21) being **characterized in that** the first calculating module (26) has a first operating mode and a second operating mode and **in that** the second calculating module (27) has a first operating mode, a second operating mode, and a third operating mode, and **in that** it comprises configuration means (30a, 30b, 30c, 32) for selecting one between the first and second operating modes of the first calculating module (26) and one from among the first, second, and third operating modes of the second calculating module (27).

2. The device according to Claim 1, comprising an instability-detection module (28) configured for supplying a control signal (U_{T1}) having a first logic value indicating a thermoacoustic instability of the plant (1) and a second logic value indicating an absence of thermoacoustic instability of the plant (1).

3. The device according to Claim 2, wherein the first calculating module (26) comprises first temperature-calculation means (34) for calculating the reference exhaust temperature (T_{RIF}) on the basis of the ambient temperature (T_{A}) according to a first calculation function (F₁), and second temperature-calculation means (35) for calculating the reference exhaust temperature (T_{RIF}) on the basis of the ambient temperature (T_{A}) according to a second calculation function (F₂) ; in the first operating mode of the first calculating module (26), the first temperature-calculation means (34) being active, and the second temperature-calculation means (35) being inactive; in the second operating mode of the first calculating module (26), the first temperature-calculation means (34) being active, and the second temperature-calculation means (35) being selectively activatable as an alternative to the first temperature-calculation means (34).

4. The device according to Claim 2 or Claim 3, wherein the second calculating module (27) comprises:
- first flowrate-calculation means (38) for calculating a first pilot-gas flowrate (Q_{P1}) on the basis of the current position (IGV%) of the adjustable inlet guide vanes and on the basis of the current exhaust temperature (T_{S}) according to a first flowrate-calculation function (P₁);
- second flowrate-calculation means (39) for calculating a second pilot-gas flowrate (Q_{P2}) on the basis of the current position (IGV%) of the adjustable inlet guide vanes and on the basis of the current exhaust temperature (T_{S}) according to a second flowrate-calculation function (P₂); and
- third flowrate-calculation means (40) for calculating a pilot-gas-flowrate correction (ΔQ_{P}) on the basis of the current position (IGV%) of the adjustable inlet guide vanes according to a third flowrate-calculation function (P₃);
in the first operating mode of the second calculating module (27), the first flowrate-calculation means (38) being active, and the second flowrate-calculation means (39) and the third flowrate-calculation means (40) being inactive; in the second operating mode of the second calculating module (27), the first flowrate-calculation means (39) being active, and the second flowrate-calculation means (39) being selectively activatable as an alternative to the first flowrate-calculation means (38) and the third flowrate-calculation means (40) being inactive; in the third operating mode of the second calculating module (27), the first flowrate-calculation means (38) being active and the third flowrate-calculation means (40) being selectively activatable in combination with the first flowrate-calculation means (38), and the second flowrate-calculation means (39) being inactive.

5. The device according to Claim 4, wherein the third flowrate-calculation function (P₃) is a periodic function.

6. The device according to Claim 5, wherein the third flowrate-calculation function (P₃) is a sinusoidal function.

7. The device according to any one of Claims 4 to 6, comprising an adder node (44) for adding the pilot-gas-flowrate correction (ΔQ_{P}) calculated by the third flowrate-calculation means (40) to the first pilot-gas flowrate (Q_{P1}) calculated by the first flowrate-calculation means (38).

8. The device according to any one of Claims 3 to 7, wherein, in the second operating mode of the first calculating module (26), the second temperature-calculation means (35) are selectively activatable as an alternative to the first temperature-calculation means (34), on the basis of the control signal (U_{T1}) supplied by the instability-detection module (28).

9. The device according to any one of Claims 4 to 8, wherein, in the second operating mode of the second calculating module (27), the second flowrate-calculation means (39) are selectively activatable as an alternative to the first flowrate-calculation means (38), on the basis of the control signal (U_{T1}) supplied by the instability-detection module (28).

10. The device according to any one of Claims 4 to 9, wherein, in the third operating mode of the second calculating module (27), the third flowrate-calculation means (40) being selectively activatable in combination with the first flowrate-calculation means (38), on the basis of the control signal (U_{T1}) supplied by the instability-detection module (28).

11. The device according to any one of the preceding claims, wherein the configuration means (30a, 30b, 30c, 32) comprise a programmable configuration module (32).

12. The device according to Claim 11, wherein the configuration means (30a, 30b, 30c, 32) comprise a first selection module (30a) for selecting one between the first and second operating modes of the first calculating module (26) and a second selection module (30b) and a third selection module (30c) for selecting one from among the first, second, and third operating modes of the second calculating module (27).

13. A method for determining operating parameters of a gas-turbine plant (1) comprising the steps of:
- calculating a reference exhaust temperature (T_{RIF}) of the gas turbine (12) on the basis of an ambient temperature (T_{A}); and
- calculating a pilot-gas flowrate (Q_{P}) to be supplied to a combustion chamber (11) of the plant (1) on the basis of a current exhaust temperature (T_{S}) of the gas turbine (12) and on the basis of a current position (IGV%) of adjustable inlet guide vanes of a compressor (10) of the plant (1);
the method being **characterized in that**:
- the step of calculating a reference exhaust temperature (T_{RIF}) comprises the step of calculating the reference exhaust temperature (T_{RIF}) selectively according to a first operating mode or a second operating mode; and
- the step of calculating a pilot-gas flowrate (Q_{P}) comprises the step of calculating the pilot-gas flowrate (Q_{P}) selectively according to a first operating mode, a second operating mode, and a third operating mode;
and **in that** it:
- comprises the step of selecting one between the first operating and second operating modes of the first calculating module (26) and one from among the first, second, and third operating modes of the second calculating module (27).

14. A gas-turbine plant for the production of electrical energy comprising:
a gas turbine (12); and
a compressor (10) comprising adjustable inlet guide vanes;
a combustion chamber (11) designed to be supplied with a pilot-gas flowrate (Q_{P});
the plant (1) being **characterized in that** it comprises a device (21) for determining operating parameters of the plant (1) according to any one of Claims 1 to 12.

## Patentansprüche

1. Vorrichtung zum Bestimmen von Betriebsparametern von einer Gasturbinenanlage (1), wobei die Vorrichtung umfasst:
ein erstes Berechnungsmodul (26) zum Berechnen einer Referenzabgastemperatur (T_{RIF}) der Gasturbine (12) auf der Basis einer Umgebungstemperatur (T_{A});
ein zweites Berechnungsmodul (27) zum Berechnen einer Zündgas-Flussrate (Q_{P}), die zu einer Verbrennungskammer (11) der Anlage (1) zugeführt werden soll, auf der Basis einer gegenwärtigen Abgastemperatur (T_{S}) der Gasturbine (12) und auf der Basis von einer gegenwärtigen Position (IGV%) von einstellbaren Einlassleitflächen von einem Kompressor (10) von der Anlage (1);
wobei die Vorrichtung **dadurch gekennzeichnet ist, dass** das erste Berechnungsmodul (26) einen ersten Betriebsmodus und einen zweiten Betriebsmodus umfasst, und **dadurch**, dass das zweite Berechnungsmodul (27) einen ersten Betriebsmodus, einen zweiten Betriebsmodus und einen dritten Betriebsmodus umfasst, und **dadurch**, dass es ein Konfigurationsmittel (30a, 30b, 30c, 32) zum Wählen zwischen einem von dem ersten und zweiten Betriebsmodus des ersten Berechnungsmoduls (26) und einem von dem ersten, dem zweiten und dem dritten Betriebsmodus des zweiten Berechnungsmoduls (27) umfasst.

2. Vorrichtung gemäß Anspruch 1, umfassend ein Instabilitäts-Erfassungsmodul (28), das für ein Zuleiten eines Steuersignals (U_{T1}) mit einem ersten Logikwert ausgelegt ist, der eine thermoakustische Instabilität der Anlage (1) anzeigt und einen zweiten Logikwert, der die Abwesenheit einer thermoakustischen Instabilität der Anlage (1) anzeigt.

3. Vorrichtung gemäß Anspruch 2, bei der das erste Berechnungsmodul (26) ein erstes Temperaturberechnungsmittel (34) zum Berechnen der Referenz-Abgastemperatur (T_{RIF}) auf der Basis der Umgebungstemperatur (T_{A}) gemäß einer ersten Berechnungsfunktion (F₁) umfasst,
und ein zweites Temperaturberechnungsmittel (35) zum Berechnen der Referenz-Abgastemperatur (T_{RIF}) auf der Basis der Umgebungstemperatur (T_{A}) gemäß einer zweiten Berechnungsfunktion (F₂); wobei in dem ersten Betriebsmodus von dem ersten Berechnungsmodul (26) das erste Temperaturberechnungsmittel (34) aktiv ist, und das zweite Temperaturberechnungsmittel (35) inaktiv ist; wobei in dem zweiten Betriebsmodus des ersten Berechnungsmoduls (26), das erste Temperatur-Berechnungsmittel (34) aktiv ist und das zweite Temperatur-Berechnungsmittel (35) wahlweise als eine Alternative zu dem ersten Temperatur-Berechnungsmittel (34) aktivierbar ist.

4. Vorrichtung gemäß Anspruch 2 oder Anspruch 3, bei der das zweite Berechnungsmodul umfasst:
- ein erstes Flussraten-Berechnungsmittel (38) zum Berechnen einer ersten Zündgas-Flussrate (Q_{P1}) auf der Basis von der gegenwärtigen Position (IGV%) der einstellbaren Einlassleitflächen und auf der Basis von der gegenwärtigen Abgastemperatur (T_{S}) gemäß einer ersten Flussraten-Berechnungsfunktion (P₁);
- ein zweites Flussraten-Berechnungsmittel (39) zum Berechnen einer zweiten Zündgas-Flussrate (Q_{P2}) auf der Basis der gegenwärtigen Position (IGV%) von den einstellbaren Einlassleitflächen und auf der Basis von der gegenwärtigen Umgebungstemperatur (T_{S}) gemäß einer zweiten Flussratenberechnungsfunktion (P₂); und
- ein drittes Flussraten-Berechnungsmittel (40) zum Berechnen einer Zündgas-Flussratenkorrektur (ΔQ_{P}) auf der Basis von der gegenwärtigen Position (IGV%) von den einstellbaren Einlassleitflächen gemäß einer dritten Flussraten-Berechnungsfunktion (P₃);
wobei in dem ersten Betriebsmodus von dem zweiten Berechnungsmodul (27), das erste Flussraten-Berechnungsmittel (38) aktiv ist, und das zweite Flussraten-Berechnungsmittel (39) und das dritte Flussraten-Berechnungsmittel (40) inaktiv sind; wobei in dem zweiten Betriebsmodus von dem zweiten Berechnungsmodul (27) das erste Flussraten-Berechnungsmittel (39) aktiv ist, und das zweite Flussraten-Berechnungsmittel (39) wahlweise aktivierbar ist, als eine Alternative zu dem ersten Flussraten-Berechnungsmittel (38) und das dritte Flussraten- Berechnungsmittel (40) inaktiv ist; wobei in dem dritten Betriebsmodus von dem zweiten Berechnungsmodul (27) das erste Flussraten-Berechnungsmittel (38) aktiv ist und das dritte Flussraten-Berechnungsmittel (40) in Kombination mit dem ersten Flussraten-Berechnungsmittel (38) wahlweise aktivierbar ist, und das zweite Flussraten-Berechnungsmittel (39) inaktiv ist.

5. Vorrichtung gemäß Anspruch 4, bei der die dritte Flussraten-Berechnungsfunktion (P₃) eine periodische Funktion ist.

6. Vorrichtung gemäß Anspruch 5, bei der die dritte Flussraten-Berechnungsfunktion (P₃) eine sinusförmig Funktion ist.

7. Vorrichtung gemäß einem der Ansprüche 4 bis 6, umfassend einen Addier-Knoten (44) zum Addieren der Zündgas-Flussratenkorrektur (ΔQ_{P}), die über das dritte Flussraten-Berechnungsmittel (40) berechnet wird, zu der ersten Zündgas-Flussrate (Q_{P1}), die über das erste Flussraten-Berechnungsmittel (38) berechnet wird.

8. Vorrichtung gemäß einem der Ansprüche 3 bis 7, bei der in dem zweiten Betriebsmodus von dem ersten Berechnungsmodul (26) das zweite Temperatur-Berechnungsmittel (35) als eine Alternative zu dem ersten Temperatur-Berechnungsmittel (34) wahlweise aktivierbar ist, auf der Basis von dem Steuersignal (U_{T1}), das von dem Instabilitäts-Erfassungsmodul (28) zugeleitet wird.

9. Vorrichtung gemäß einem der Ansprüche 4 bis 8, bei der in dem zweiten Betriebsmodus von dem zweiten Berechnungsmodul (27) das zweite Flussraten-Berechnungsmittel (39) wahlweise aktivierbar ist, als eine Alternative zu dem ersten Flussraten-Berechnungsmittel (38) auf der Basis von dem Steuersignal (U_{T1}), das von dem Instabilitäts-Erfassungsmodul (28) zugeleitet wird.

10. Vorrichtung gemäß einem der Anspruche 4 bis 9, bei der in dem dritten Betriebsmodus von dem zweiten Berechnungsmodul (27) das dritte Flussraten-Berechnungsmittel (40) in Kombination mit dem ersten Flussraten-Berechnungsmittel (38) wahlweise aktivierbar ist auf der Basis von dem Steuersignal (U_{T1}), das über das Instabilitäts-Erfassungsmodul (28) zugeleitet wird.

11. Vorrichtung gemäß einem der vorstehenden Ansprüche, bei der das Konfigurationsmittel (30a, 30b, 30c, 32) ein programmierbares Konfigurationsmodul (32) umfasst.

12. Vorrichtung gemäß Anspruch 11, bei der das Konfigurationsmittel (30a, 30b, 30c, 32) ein erstes Auswahlmodul (30a) zum Auswählen zwischen einem von dem ersten und zweiten Betriebsmodus von dem ersten Berechnungsmodul (26) und ein zweites Auswahlmodul (30b) und ein drittes Auswahlmodul (30c) zum Auswählen von einem unter den ersten, zweiten und dritten Betriebsmodus von dem zweiten Berechnungsmodul (27) umfasst.

13. Verfahren zum Bestimmen von Betriebsmodi von einer Gasturbinen-Anlage (1), umfassend die Schritte:
- Berechnen von einer Referenz-Abgastemperatur (T_{RIF}) der Gasturbine (12) auf der Basis von einer Umgebungstemperatur (T_{A}); und
- Berechnen von einer Zündgas-Flussrate (Q_{P}), die zu einer Verbrennungskammer (11) von der Anlage (1) zugeführt werden soll, auf der Basis von einer gegenwärtigen Abgastemperatur (T_{S}) der Gasturbine (12) und auf der Basis von der gegenwärtigen Position (IGV%) von einstellbaren Einlassleitflächen von einem Kompressor (10) der Anlage (1);
wobei das Verfahren **dadurch gekennzeichnet ist, dass**:
- der Schritt eines Berechnens eines Referenz-Abgastemperatur (T_{RIF}) den Schritt von eines Berechnens der Referenz-Abgastemperatur (T_{RIF}) wahlweise gemäß eines ersten Betriebsmodus oder eines zweiten Betriebsmodus umfasst; und
- der Schritt eines Berechnens einer Zündgas-Flussrate (Q_{P}) den Schritt eines Berechnens der Zündgas-Flussrate (Q_{P}) wahlweise gemäß einem ersten Betriebsmodus, einem zweiten Betriebsmodus und einem dritten Betriebsmodus umfasst;
und **dadurch**, dass:
- es den Schritt eines Auswählen zwischen dem ersten Betriebsmodus und dem zweiten Betriebsmodus von dem ersten Berechnungsmodul (26) und von einem von dem ersten, dem zweiten und dem dritten Betriebsmodus von dem zweiten Berechnungsmodul (27) umfasst.

14. Gasturbinen-Anlage für die Herstellung von elektrischer Energie umfassend:
eine Gasturbine (12); und
einen Kompressor (10), der einstellbare Einlass-Leitflächen umfasst;
eine Verbrennungskammer (11), die ausgelegt ist, um mit einer Zündgas-Flussrate (Q_{P}) versorgt zu werden;
wobei die Anlage (1) **dadurch gekennzeichnet ist, dass** sie eine Vorrichtung (21) zum Bestimmen von Betriebsparametern von der Anlage (1) gemäß einem der Ansprüche 1 bis 12 umfasst.

## Revendications

1. Dispositif permettant de déterminer des paramètres de fonctionnement d'une centrale à turbine à gaz (1), le dispositif comprenant :
un premier module de calcul (26) pour calculer une température d'échappement de référence (T_{RIF}) de la turbine à gaz (12) sur la base d'une température ambiante (T_{A}) ;
un deuxième module de calcul (27) pour calculer un débit de gaz pilote (Q_{P}) à fournir à une chambre de combustion (11) de la centrale (1) sur la base d'une température d'échappement actuelle (T_{S}) de la turbine à gaz (12) et sur la base d'une position actuelle (IGV%) d'aubes directrices d'admission réglables d'un compresseur (10) de la centrale (1) ;
le dispositif (21) étant **caractérisé en ce que** le premier module de calcul (26) présente un premier mode de fonctionnement et un deuxième mode de fonctionnement et **en ce que** le deuxième module de calcul (27) présente un premier mode de fonctionnement, un deuxième mode de fonctionnement, et un troisième mode de fonctionnement, et **en ce qu'**il comprend des moyens de configuration (30a, 30b, 30c, 32) destinés à sélectionner un mode entre le premier et deuxième modes de fonctionnement du premier module de calcul (26) et un mode parmi les premier, deuxième, et troisième modes de fonctionnement du deuxième module de calcul (27).

2. Dispositif selon la revendication 1, comprenant un module de détection d'instabilité (28) configuré pour fournir un signal de commande (U_{T1}) ayant une première valeur logique indiquant une instabilité thermo-acoustique de la centrale (1) et une deuxième valeur logique indiquant une absence d'instabilité thermo-acoustique de la centrale (1).

3. Dispositif selon la revendication 2, dans lequel le premier module de calcul (26) comprend un premier moyen de calcul de température (34) destiné à calculer la température d'échappement de référence (T_{RIF}) sur la base de la température ambiante (T_{A}) selon une première fonction de calcul (F₁), et un deuxième moyen de calcul de température (35) destiné à calculer la température d'échappement de référence (T_{RIF}) sur la base de la température ambiante (T_{A}) selon une deuxième fonction de calcul (F₂) ; dans le premier mode de fonctionnement du premier module de calcul (26), le premier moyen de calcul de température (34) étant actif, et le deuxième moyen de calcul de température (35) étant inactif ; dans le deuxième mode de fonctionnement du premier module de calcul (26), le premier moyen de calcul de température (34) étant actif, et le deuxième moyen de calcul de température (35) pouvant être sélectivement activé comme une alternative au premier moyen de calcul de température (34).

4. Dispositif selon la revendication 2 ou 3, dans lequel le deuxième module de calcul (27) comprend :
un premier moyen de calcul de débit (38) destiné à calculer un premier débit de gaz pilote (Q_{P1}) sur la base de la position actuelle (IGV%) des aubes directrices d'admission réglables et sur la base de la température d'échappement actuelle (T_{S}) selon une première fonction de calcul de débit (P₁) ;
un deuxième moyen de calcul de débit (39) destiné à calculer un deuxième débit de gaz pilote (Q_{P2}) sur la base de la position actuelle (IGV%) des aubes directrices d'admission réglables et sur la base de la température d'échappement actuelle (T_{S}) selon une deuxième fonction de calcul de débit (P₂) ; et
un troisième moyen de calcul de débit (40) destiné à calculer une correction de débit de gaz pilote (ΔQ_{P}) sur la base de la position actuelle (IGV%) des aubes directrices d'admission réglables selon une troisième fonction de calcul de débit (P₃) ;
dans le premier mode de fonctionnement du deuxième module de calcul (27), le premier moyen de calcul de débit (38) étant actif, et le deuxième moyen de calcul de débit (39) et le troisième moyen de calcul de débit (40) étant inactifs ; dans le deuxième mode de fonctionnement du deuxième module de calcul (27), le premier moyen de calcul de débit (39) étant actif, et le deuxième moyen de calcul de débit (39) pouvant être sélectivement activé comme une alternative au premier moyen de calcul de débit (38) et le troisième moyen de calcul de débit (40) étant inactif ; dans le troisième mode de fonctionnement du deuxième module de calcul (27), le premier moyen de calcul de débit (38) étant actif et le troisième moyen de calcul de débit (40) pouvant être sélectivement activé en combinaison avec le premier moyen de calcul de débit (38), et le deuxième moyen de calcul de débit (39) étant inactif.

5. Dispositif selon la revendication 4, dans lequel la troisième fonction de calcul de débit (P₃) est une fonction périodique.

6. Dispositif selon la revendication 5, dans lequel la troisième fonction de calcul de débit (P₃) est une fonction sinusoïdale.

7. Dispositif selon l'une quelconque des revendications 4 à 6, comprenant un noeud additionneur (44) pour additionner la correction de débit de gaz pilote (ΔQ_{P}) calculée par le troisième moyen de calcul de débit (40) et le premier débit de gaz pilote (Q_{P1}) calculé par le premier moyen de calcul de débit (38).

8. Dispositif selon l'une quelconque des revendications 3 à 7, dans lequel, dans le deuxième mode de fonctionnement du premier module de calcul (26), le deuxième moyen de calcul de température (35) peut être sélectivement activé comme une alternative au premier moyen de calcul de température (34), sur la base du signal de commande (U_{T1}) fourni par le module de détection d' instabilité (28).

9. Dispositif selon l'une quelconque des revendications 4 à 8, dans lequel, dans le deuxième mode de fonctionnement du deuxième module de calcul (27), le deuxième moyen de calcul de débit (39) peut être sélectivement activé comme une alternative au premier moyen de calcul de débit (38), sur la base du signal de commande (U_{T1}) fourni par le module de détection d'instabilité (28).

10. Dispositif selon l'une quelconque des revendications 4 à 9, dans lequel, dans le troisième mode de fonctionnement du deuxième module de calcul (21), le troisième moyen de calcul de débit (40) peut être sélectivement activé en combinaison avec le premier moyen de calcul de débit (38), sur la base du signal de commande (U_{T1}) fourni par le module de détection d'instabilité (28).

11. Dispositif selon l'une quelconque des revendications précédentes, dans lequel les moyens de configuration (30a, 30b, 30c, 32) comprennent un module de configuration programmable (32).

12. Dispositif selon la revendication 11, dans lequel les moyens de configuration (30a, 30b, 30c, 32) comprennent un premier module de sélection (30a) destiné à sélectionner un mode entre le premier et deuxième modes de fonctionnement du premier module de calcul (26) et un deuxième module de sélection (30b) et un troisième module de sélection (30c) destinés à sélectionner un mode parmi les premier, deuxième, et troisième modes de fonctionnement du deuxième module de calcul (27).

13. Procédé permettant de déterminer des paramètres de fonctionnement d'une centrale à turbine à gaz (1) comprenant les étapes qui consistent :
à calculer une température d'échappement de référence (T_{RIF}) de la turbine à gaz (12) sur la base d'une température ambiante (T_{A}) ; et
à calculer un débit de gaz pilote (Q_{P}) à fournir à une chambre de combustion (11) de la centrale (1) sur la base d'une température d'échappement actuelle (T_{S}) de la turbine à gaz (12) et sur la base d'une position actuelle (IGV%) des aubes directrices d'admission réglables d'un compresseur (10) de la centrale (1) ;
le procédé étant **caractérisé en ce que** :
l'étape de calcul d'une température d'échappement de référence (T_{RIF}) comprend l'étape qui consiste à calculer la température d'échappement de référence (T_{RIF}) sélectivement selon un premier mode de fonctionnement ou un deuxième mode de fonctionnement ; et
l'étape de calcul d'un débit de gaz pilote (Q_{P}) comprend l'étape qui consiste à calculer le débit de gaz pilote (Q_{P}) sélectivement selon un premier mode de fonctionnement, un deuxième mode de fonctionnement, et un troisième mode de fonctionnement ; et
**en ce qu'**il comprend :
l'étape de sélection d'un mode entre le premier et deuxième modes de fonctionnement du premier module de calcul (26) et d'un mode parmi les premier, deuxième et troisième modes de fonctionnement du deuxième module de calcul (27).

14. Centrale à turbine à gaz pour la production d'énergie électrique comprenant :
une turbine à gaz (12) ; et
un compresseur (10) comprenant des aubes directrices d'admission réglables ;
une chambre de combustion (11) conçue pour être alimentée avec un débit de gaz pilote (Q_{P}) ;
la centrale (1) étant **caractérisée en ce qu'**elle comprend un dispositif (21) pour déterminer des paramètres de fonctionnement de la centrale (1) selon l'une quelconque des revendications 1 à 12.
